(19) Europäisches Patentamt
European Patent Office
Office européen des brevets

(11) EP 2 700 660 B1

# (12) EUROPEAN PATENT SPECIFICATION

(45) Date of publication and mention of the grant of the patent:
**16.11.2016 Bulletin 2016/46**

(51) Int Cl.:
***C08F 8/30*** *(2006.01)* ***C08F 8/32*** *(2006.01)*

(21) Application number: **13178311.0**

(22) Date of filing: **29.07.2013**

## (54) HINDERED ALKYLAMINE POLYMER

GEHINDERTES ALKYLAMINPOLYMER

POLYMÈRE D'ALKYLAMINE ENCOMBRÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.08.2012 US 201261692783 P**

(43) Date of publication of application:
**26.02.2014 Bulletin 2014/09**

(73) Proprietors:
- **Rohm and Haas Company**
  **Philadelphia, PA 19106-2399 (US)**
- **Dow Global Technologies LLC**
  **Midland, MI 48674 (US)**

(72) Inventors:
- **Balijepalli, Sudhakar**
  **Midland, MI Michigan 48640 (US)**
- **Hawkins, Douglas Raymond**
  **Maple Glenn, PA Pennsylvania 19002 (US)**
- **Manna, Kathleen**
  **Quakertown, PA Pennsylvania 18951 (US)**
- **San Miguel Rivera, Lidaris**
  **Midland, MI Michigan 48642 (US)**
- **NAIR, Shubhangi H.**
  **Waje jakat naka, Pune-411029**
  **Maharashtra, India (IN)**

(74) Representative: **Houghton, Mark Phillip et al**
**Patent Outsourcing Limited**
**1 King Street**
**Bakewell, Derbyshire DE45 1DZ (GB)**

(56) References cited:
**WO-A1-99/01514** **WO-A1-2009/076722**
**DE-A1- 4 330 971** **DE-A1-102006 033 242**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 700 660 B1

## Description

### Background of the Invention

The present invention relates to a polymer comprising structural units of a hindered alkylamine, which is useful as an adjuvant for a biocide in coatings compositions.

The efficacy of isothiazolone biocides such as the commercially available KATHON™ series biocides (A Trademark of The Dow Chemical Company or its Affiliates) can be improved by the addition of an adjuvant such as alkyl amines, alkanol amines, alkyl amine ethoxylates, and amine oxides for the preservation of wood, fuels, and metal working fluids (see WO 2009/140061A2 and US 6,448,279B1). These adjuvants, though effective, are volatile organic compounds (VOCs) and may be restricted in their use due to regulatory considerations. It would therefore be desirable to develop an adjuvant for isothiazolone biocides that does not add VOCs.

### Summary of the Invention

The present invention addresses a need in the art by providing a polymer having a backbone comprising pendant hindered primary amine groups bonded to the polymer backbone by way of an amide, ester, or thioester linkage. The polymer is useful as a non-VOC producing adjuvant for isothiazolone biocides in coatings formulations.

### Detailed Description of the Invention

The present invention provides a polymer having a backbone comprising pendant hindered primary amine groups bonded to the polymer backbone by way of an amide, ester, or thioester linkage. As used herein, the term, "pendant hindered primary amine group" refers to a group attached to the polymer backbone that contains a primary amine attached to a quaternary carbon atom. The group is further characterized by an amide, ester, or thioester, group that is linked to the polymer backbone.

The polymer can be prepared by contacting a compound comprising a primary hindered amine and a primary unhindered amine or alcohol or thiol with a polymer containing structural units of an acrylic acid, a methacrylic acid, a methacrylate, or an acrylate, or a combination thereof. As used herein, "unhindered" means that the amine or alcohol or thiol is attached to a $CH_2$ group. The general preparation is illustrated as follows:

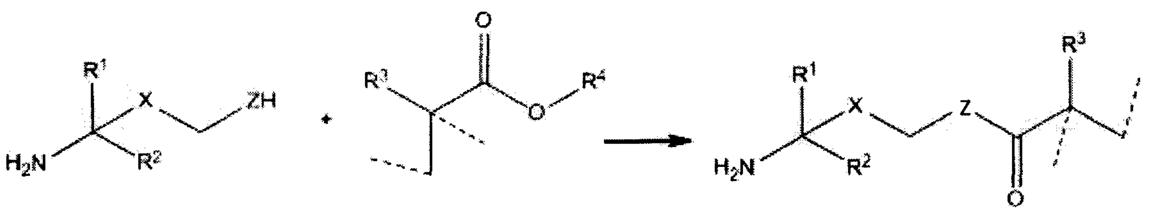

where $R^1$ and $R^2$ are each independently $C_1$-$C_{12}$ linear or branched alkyl groups; $R^3$ is H or $CH_3$; $R^4$ is H or $C_1$-$C_6$ alkyl; X is a bond or a linear, branched, or cyclic group containing from 1 to 20 carbon atoms; Z is NH, O, or S; and the dotted lines represent the point of attachment of the group to the polymer backbone. Preferably, $R^1$ and $R^2$ are each independently $C_1$-$C_4$ linear or branched alkyl groups; most preferably, $R^1$ and $R^2$ are both methyl groups. Z is preferably NH and X is preferably a bond. Thus, a preferred pendant primary amine is 1,2-diamino-2-methylpropane (DAMP), while a preferred pendant hindered primary amine group is as illustrated:

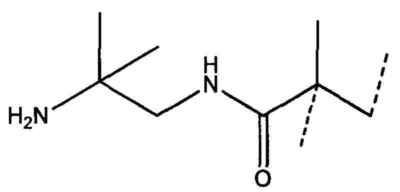

The term "structural unit" is used herein to refer to the remnant of the named monomer or compound after polymerization or grafting. For example, a structural unit of methyl methacrylate is illustrated:

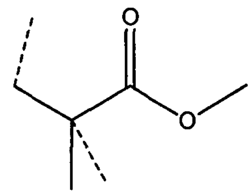

where the dotted lines represent the points of attachment to the polymer backbone.

The polymer is preferably prepared by contacting a suitable acrylate or methacrylate polymer, such as poly(methyl methacrylate) (PMMA), preferably having a $M_w$ in the range of 1,000 to 1,000,000 Daltons, with a compound containing a hindered primary amine group and a unhindered primary amine or OH or SH group, such as DAMP, under conditions suitable to form a polymer with structural units of the hindered primary amine. Suitable conditions include heating the diamine and the acrylate or methacrylate polymer in a polar aprotic solvent, such as N-methyl-2-pyrrolidinone (NMP), at a temperature above the boiling point of water, preferably at a temperature in the range of about 150 °C to 200 °C, for a sufficient time to convert at least a portion of the acrylate or methacrylate polymer to the desired product. The polymer generally contains some amount of unreacted starting material and may contain functionality arising from side reactions, including acid functionality. Preferably, the polymer contains from 10 to 95 mole percent structural units of the hindered primary amine; and from 5 to 90 mole percent of structural units of methyl methacrylate or methacrylic acid or a combination thereof.

It has been shown that a hindered amine such as DAMP grafted onto an (poly)acrylate or (poly)methacrylate backbone, such as a PMMA backbone, has an adjuvant effect on the efficacy of isothiazolone biocides, such as the commercially available KATHON™ LX Biocide (a Trademark of The Dow Chemical Company or its Affiliates). The presence of pendant hindered primary amine groups results in a more stable adjuvant than pendant amine groups attached to a CH or $CH_2$ group; though not bound by theory, it is believed that this added stability results from a short circuiting of a beta-elimination mechanism, which requires the presence of a hydrogen atom on the carbon atom adjacent to the primary amine group. Furthermore, the preparation of the hindered primary amine polymer is facilitated by the greater selectivity of the unhindered primary amine, alcohol, or thiol for the pendant acid or ester groups of the functionalized polymer.

The polymer with pendant hindered amine groups is useful in coatings formulations containing an aqueous dispersion of polymer particles (i.e., binder) and pigment, such as $TiO_2$ and fully or partially encapsulated $TiO_2$ as well as one or more additives including solvents; fillers; rheology modifiers; hollow pigments, including pigments having one or more voids; dispersants, such as aminoalcohols and polycarboxylates; surfactants; defoamers; other preservatives, including biocides, mildewcides, fungicides, algaecides, and combinations thereof; flow agents; leveling agents; and neutralizing agents, such as hydroxides, amines, ammonia, and carbonates.

The polymer described herein is also useful in other formulations where isothiazolones are used to improve preservative properties, including caulks, sealants, metal working fluids, and other latexes.

The polymer is not merely useful as an adjuvant for isothiazolones; indeed, it has further been discovered that the polymer containing hindered primary amine groups can be used as a dispersant in coatings formulations containing rheology modifiers such as hydrophobically modified ethylene oxide urethane polymers (HEURS) and hydroxyethylcellulose polymers (HECs) to improve hiding in coatings formulations. It has also been discovered that DAMP-g-PMMA is effective as a dispersant that is at least as effective as a functionalized polyacrylate copolymer such as the commercially available TAMOL™ Dispersant (A Trademark of The Dow Chemical Company or its Affiliates).

## Examples

The following examples are for illustrative purposes only and are not intended to limit the scope of the invention. The binder is 50 weight percent butyl acrylate; 49 weight percent methyl methacrylate; and 1 weight percent methacrylic acid. The biocide is KATHON™ LX Biocide.

### Example 1 - Preparation of PMMA-g-DAMP, Binder, Biocide Blend

#### A. Catalytic Preparation of PMMA-g-DAMP

PMMA (20 g, $M_w$ ~ 120,000 g/mol), DAMP (35 g), NMP (50 mL) and dibutyl tin oxide (100 mg) were heated in a reaction flask equipped with a reflux condenser at 180-200°C for 6 h. The product was precipitated in diethyl ether and dried *in vacuo* at 60 °C. This polymer was redissolved in NMP and reprecipitated in diethyl ether. The polymer was dried *in vacuo* at 60 °C.

B. Preparation of Blend

A portion of PMMA-g-DAMP from step A (1.5 g, 13.7 weight percent PMMA-g-DAMP in water) and water (3.5 g) were blended with the binder (50 g) to give a final PMMA-g-DAMP concentration of 0.37 w/w percent. Auto titration with KOH revealed a primary amine concentration of about 50 ppm. The sample was heat aged at 50 °C for 10 days. A portion of 10-fold diluted biocide (36 μL) was added to a vial containing 10 g of the heat-aged PMMA-g-DAMP/binder mixture to give a 5-ppm biocide concentration. The vial was shaken at ~200 rpm for 20 min. A portion of this mixture was removed (1 g) for biocide analysis.

Example 2 - Preparation of PMMA-g-DAMP, Binder, Biocide Blend

A. Non-Catalytic Preparation of PMMA-g-DAMP

PMMA (20 g, $M_w$ ~ 120,000 g/mol), DAMP (35 g), and NMP (50 mL) were heated in a reaction flask equipped with a reflux condenser at 180-200°C for 6 h. The product was isolated and purified as described in Example 1A.

B. Preparation of Blend

A portion of the PMMA-g-DAMP from step A (1.7 g, 12 weight percent PMMA-g-DAMP in water) and water (3.3 g) were blended with the binder (50 g) to give a final PMMA-g-DAMP concentration of 0.37 w/w percent. Auto titration with KOH revealed a primary amine concentration of about 50 ppm. The sample was heat aged at 50 °C for 10 days. A portion of 10-fold diluted biocide (36 μL) was added to a vial containing 10 g of the heat-aged PMMA-g-DAMP/binder mixture to give a 5-ppm biocide concentration. The vial was shaken at ~200 rpm for 20 min. A portion of this mixture was removed (1 g) for biocide analysis.

Comparative Example 1 - Preparation of Binder Biocide Blend

A mixture of the biocide (5 ppm) and the binder without PMMA-g-DAMP was prepared to measure the adjuvant effects of the PMMA-g-DAMP.

Preparation of the Inoculum

All bacteria and yeast were stored at -70 °C to -80 °C in broth and glycerol (15%) prior to inoculum preparation. Molds were maintained on potato dextrose agar (PDA) plates at 2-5 °C. The bacteria and yeast cultures were thawed and 0.1-mL aliquots of each were transferred into separate 10-mL aliquots of tryptic soy broth (TSB). These cultures were incubated at 30 °C for 18-24 h, with shaking at 150-200 rpm.

A volume of 10 mL of sterile phosphate buffer was measured out. The two mold strains were added by wetting sterile swabs in phosphate buffer, or water, and then rolling the swabs over the molds, covering an area of approximately 1 $in^2$ on each plate. The mold-covered swabs were then immersed in the 10 mL of phosphate buffer and agitated to suspend the spores. A volume of 0.1 mL of each bacterial culture, and a volume of 1 mL of each yeast culture, was then added to the mold mixture. The inoculum was blended by vortexing briefly. The organisms used in the inoculum and their corresponding American Type Culture Collection numbers (ATCC #) are shown in Table 1.

Table 1 - Contents of Standard Industrial Inoculum

| **Microorganism** | **ATCC #** |
|---|---|
| **Gram Negative Bacteria** | |
| *Pseudomonas aeruginosa* | 10145 |
| *Pseudomonas putida* | 12633 |
| *Enterobacter aerogenes* | 13048 |
| *Alcaligenes faecalis* | 25094 |
| *Proteus vulgaris* | 13315 |
| *Burkholderia cepacia* | 21809 |
| *Pseudomonas fluorescens* | 13525 |

(continued)

| | |
|---|---|
| **Yeast** | |
| *Saccharomyces cerevisiae* | 2338 |
| *Candida lipolytica* | 18942 |
| **Mold** | |
| *Aspergillus niger* | 6275 |
| *Penicillium ochrochloron* | 9112 |

Each sample of the heat-aged binder was dosed with 0.1 mL of the inoculum described above. Samples were inverted several times to mix in the microorganisms. This inoculation challenged each test sample with $10^6$-$10^7$ colony forming units/mL latex. Using a 10-μL sterile loop, latex samples were streaked onto tryptic soy agar (TSA) plates. This procedure was carried at t = 0 and at several other time points during the first ~5 h of the experiment to obtain speed-of-kill data. Additional time points were taken at t = 1,2 and 7 days. Between time points, all samples were stored at 30 °C. In addition, all streaked TSA plates were incubated at 30 °C. Normally, plates were rated for microbial growth following 48 h of incubation. The growth rating system for challenge tests is illustrated in Table 2 and the summary of the results for preservative efficacy testing is shown in Table 3.

Table 2 - Rating System for Challenge Testing

| Number of Colonies on Plate | Rating Score | Estimated Colony Forming Units/mL | Contamination |
|---|---|---|---|
| None | 0 | $<10^2$ | None |
| <10 | Tr | $10^2$-$10^3$ | Trace |
| 10 to 100 | 1 | $10^3$-$10^4$ | Very Light |
| 100 to 1000 | 2 | $10^4$-$10^5$ | Light |
| 1000 to 10,000 | 3 | $10^5$-$10^6$ | Moderate |
| >10,000 | 4 | $>10^6$ | Heavy |

Table 3 - Results for Preservative Efficacy Testing

| | | Growth Ratings | | | | | | |
|---|---|---|---|---|---|---|---|---|
| PMMA-g-DAMP (Dosages b/f Heat-Aging) | Biocide (ppm) | 0 h | 2 h | 3.5 h | 5 h | 24 h | 48 h | 168 h |
| Comp. Ex. 1 | 5 | 4 | 2 | 1 | Tr | 1 | 0 | 0 |
| Ex. 1B (~50 ppm) | 5 | 4 | 1 | 0 | 0 | 0 | 0 | 0 |
| Ex. 2B (~50 ppm) | 5 | 4 | 2 | 0 | 0 | 0 | 0 | 0 |

The results show that the DAMP-g-PMMA has an adjuvant effect on an isothiazolone biocide at 50 ppm primary amine as seen by complete microbial kill at 3.5 h vs 48 h for the sample without the polymer.

Example 3 - Preparation of PMMA-g-DAMP Dispersant Formulation

Ti-Pure R-706 $TiO_2$ ($TiO_2$ 37.53 g) was combined with PMMA-g-DAMP ($M_w$ = 5000, 10% aqueous, amine value 3.6) and DI water in a 50-g FlackTec SpeedMixer cup followed by mixing at 2200 rpm for 6 min to form the grind. RHOPLEX™ SG-10M Binder (A Trademark of The Dow Chemical Company or its Affiliates) was weighed into a 250-mL container followed by addition of the grind with stirring at 300-400 rpm for 10 min. Texanol coalescent, ACRYSOL™ RM-2020NPR Rheology Modifier (RM1, A Trademark of The Dow Chemical Company or its Affiliates), ACRYSOL™ RM-825 Rheology Modifier (RM2), and TERGITOL™ 15-S-9 Surfactant were added in the order shown in Table 4 with mixing. The completed batch was mixed for 10 min and equilibrated overnight before testing.

Comparative Example 2 - Preparation of Commercial Dispersant Formulation

The procedure was carried out substantially as described for Example 3 except that TAMOL™ Dispersant (A

Trademark of The Dow Chemical Company or its Affiliates) was used instead of the PMMA-g-DAMP. The amounts and order of addition of components for the formulations are shown in Table 4.

| **Grind** | | g | g |
|---|---|---|---|
| | Comp. Ex 2 Dispersant | 1.12 | |
| | Example 3 Dispersant | | 5.63 |
| | Water | 12.93 | 8.42 |
| | $TiO_2$ | 37.53 | 37.53 |
| Grind Subtotal | | 51.58 | 51.58 |
| | | | |
| | | | |
| **LetDown** | | | |
| | Binder | 111.5 | 111.5 |
| | Coalescent | 4.46 | 4.46 |
| | Water | 28.37 | 28.37 |
| | Rheology modifier 1 | 4.49 | 4.49 |
| | Rheology modifier 2 | 0.11 | 0.11 |
| | Surfactant | 0.8 | 0.8 |
| | | | |
| Totals | | 201.31 | 201.31 |

Kubelka-Munk S/mil Test Method

Coatings for hiding were made on a Symyx coating station on black release paper panels (Leneta RC-B-1 charts) using a 3-mil gap with a 2" doctor blade. The coatings were dried in a constant temperature/humidity laboratory for one day. The Y-Reflectance was measured on the Symyx Color Gloss Thickness (CGT) module using an Ocean Optics ISP-REF integrating Sphere with a 0.4" sampling aperture connected to an Ocean Optics USB 4000 spectrometer. A 1" x 2" rectangle was cut from the center of the coating sample using a Naef and Clicker Cutter Press. The weight of the rectangle samples were measured on an analytical balance. Electrical tape was used to pull off entire coating cleanly followed by measuring the weight of the un-coated reactangle on an analytical balance. For each paint sample, 4 replicate coatings were tested and the average Kubelka/Munk coefficient S (used to characterize hiding property), was calculated by using Equation 1.

Equation 1:

$$S = \frac{R}{X \times (1 - R^2)} \times \ln \frac{1 - (R_B \times R)}{1 - \frac{R_B}{R}}$$

where X is the average film thickness, R is the estimated reflectance of the thick film (R = 0.94) and $R_B$ is the average reflectance over black of the thin film (equals Y measured from color experiment). X can be calculated from the weight of the paint film ($W_{pf}$), the density (D) of the dry film; and the film area (A), as describe in Equation 2.

Equation 2:

$$X(mils) = \frac{W_{pf}(g) \times 1000(mil/in)}{D(lbs/gal) \times 1.964(g/in^3/lbs/gal) \times A(in\ \ )}$$

Adsorption Centrifugation Test Method

DI water (24.59 g) was added to each composite mixture (15.41 g) and mixed on a roller at 15 rpm for 15 min. Each sample was then centrifuged at 7000 rpm at 25 °C for 15 min using a Sorvall Legend X1R centrifuge equipped with a Fiberlite F15-8x50cy fixed-angle rotor. Control samples were prepared using the same loading of RHOPLEX SG-10M Acrylic Latex (5.41 g) in DI water (27.21 g) without the dispersant and $TiO_2$ The percent solids of the supernatant of each sample was determined by pipetting approximately 3 g of solution into a tared aluminum dish and drying in a 105 °C oven for 1 h and recording the dried weight of the sample. The amount of latex adsorption was calculated using Equation 3:

Equation 3:

$$Ad\ (\%) = \left[1 - \frac{W_{f,s}}{W_{i,s}} \Big/ \frac{W_{f,c}}{W_{i,c}}\right] \text{x } 100\%$$

where $W_{i,s}$ is the initial weight of the sample supernatant, $W_{f,s}$ is the final weight of the dried sample supernatant, $W_{i,c}$ is the initial weight of the control supernatant, and $W_{f,c}$ is the final weight of the dried control supernatant. Following the Kubelka-Munk S/mil Test Method and using Equation 1, S/mil was calculated for each paint.

Resistance Test Method For Tannin Stain Blocking

This method is an accelerated procedure to determine the effectiveness of a paint at blocking the migration of tannin stains from wood substrates into a pigmented topcoat. Tannin Stain Blocking is defined as the ability of a coating, usually a primer, to prevent the appearance of tannins or other wood-based chromophores in or on the surface of a topcoat. Two coats of paint were brush-applied to cedar board with 2 hours separating each coat, after which time the painted board was placed in a fog-box overnight. The films were measured with a colorimeter and L*a*b* with measurements made over three locations on the board. The Hunter whiteness index W was calculated according to the following equation:

$$\text{Hunter \#2 W} = 100 - (100 - L)^2 + (a^2 + b^2)^{1/2}$$

The S/mil and Hunter whiteness index for the two dispersants are summarized in Table 5.

Table 5 - Summary of S/mil and Hunter Whiteness Index for the Dispersants

| | S/mil | sd | W | sd |
|---|---|---|---|---|
| Comp. Ex. 2 Dispersant | 7.0 | 0.1 | 75.5 | 0.9 |
| Ex.3 dispersant | 7.2 | 0.1 | 84.6 | 1.9 |
| sd = standard deviation | | | | |

The data show that the PMMA-g-DAMP dispersant shows comparable hiding to the commercial dispersant

and superior stain blocking.

**Claims**

1. A polymer having a backbone comprising pendant hindered primary amine groups that are attached to a quaternary carbon atom and are bonded to the polymer backbone by way of an amide, ester, or thioester linkage.

2. The polymer of Claim 1 which further comprises structural units of an acrylate or methacrylate.

3. The polymer of Claim 2 wherein the methacrylate is methyl methacrylate and the pendant hindered primary amine groups are bonded to the polymer backbone by way of an amide linkage.

4. The polymer of either of Claims 2 or 3 which contains from 5 to 90 mole percent structural units of methyl methacrylate or methacrylic acid or a combination thereof and from 10 to 95 mole percent pendant hindered primary amine groups **characterized by** the following formula:

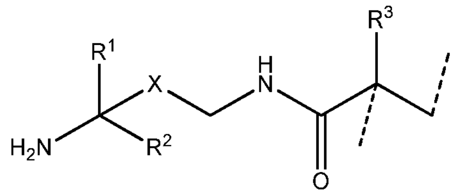

wherein where $R^1$ and $R^2$ are each independently a $C_1$-$C_{12}$ linear or branched alkyl group; $R^3$ is H or $CH_3$; X is a bond or a linear, branched, or cyclic group containing from 1 to 20 carbon atoms; and wherein the dotted lines represent the point of attachment of the group to the polymer backbone.

5. The polymer of Claim 4 wherein the pendant hindered primary amine groups are **characterized by** the following formula:

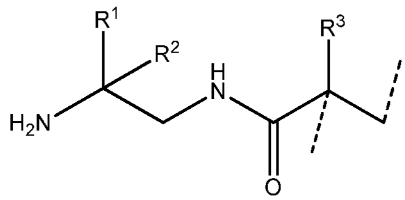

wherein $R^1$ and $R^2$ are each $C_1$-$C_4$ linear or branched alkyl groups; and $R^3$ is $CH_3$.

6. The polymer of Claim 5 wherein the pendant hindered primary amine groups are **characterized by** the following formula:

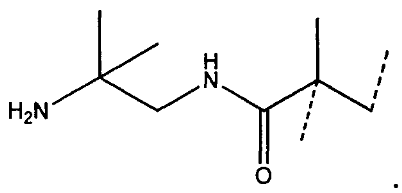

7. A composition comprising the hindered amine polymer of any of Claims 1 to 6, a binder, and one or more components selected from the group consisting of an isothiazolone, a HEUR rheology modifier, an HEC rheology modifier, and a pigment.

8. The composition of Claim 7 which comprises an acrylic binder, from 5 to 100 ppm amine of the hindered amine

polymer, and from 1 to 20 ppm of the isothiazolone, wherein the hindered amine polymer is a 1,2-diamino-2-methylpropane-g-poly(methyl methacrylate).

**9.** The composition of Claim 7 or 8 which comprises a HEUR rheology modifier and a pigment, wherein the pigment is $TiO_2$.

**10.** The composition of Claim 7 or 8 which comprises an HEC rheology modifier and a pigment, wherein the pigment is $TiO_2$.

**Patentansprüche**

**1.** Ein Polymer, das eine Hauptkette aufweist, die gehinderte primäre Aminseitengruppen, die an einem quaternären Kohlenstoffatom befestigt sind und durch eine Amid-, Ester- oder Thioesterbindung an die Polymerhauptkette gebunden sind, beinhaltet.

**2.** Polymer gemäß Anspruch 1, das ferner strukturelle Einheiten eines Acrylats oder Methacrylats beinhaltet.

**3.** Polymer gemäß Anspruch 2, wobei das Methacrylat Methylmethacrylat ist und die gehinderten primären Aminseitengruppen durch eine Amidbindung an die Polymerhauptkette gebunden sind.

**4.** Polymer gemäß einem der Ansprüche 2 oder 3, das von 5 bis 90 Molprozent strukturelle Einheiten von Methylmethacrylat oder Methacrylsäure oder eine Kombination davon und von 10 bis 95 Molprozent gehinderte primäre Aminseitengruppen enthält, **gekennzeichnet durch** die folgende Formel:

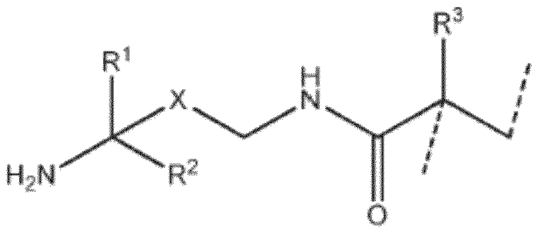

wobei $R^1$ und $R^2$ jeweils unabhängig eine lineare oder verzweigte $C_1$-$C_{12}$-Alkylgruppe sind; $R^3$ H oder $CH_3$ ist; X eine Bindung oder eine lineare, verzweigte oder zyklische Gruppe ist, die von 1 bis 20 Kohlenstoffatome enthält; und wobei die gepunkteten Linien den Punkt der Befestigung der Gruppe an der Polymerhauptkette darstellt.

**5.** Polymer gemäß Anspruch 4, wobei die gehinderten primären Aminseitengruppen durch die folgende Formel gekennzeichnet sind:

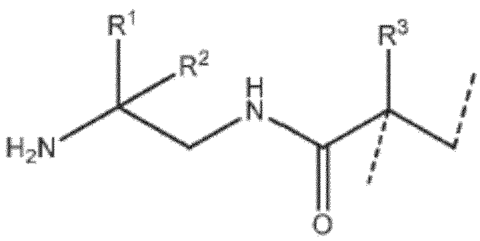

wobei $R^1$ und $R^2$ jeweils lineare oder verzweigte $C_1$-$C_4$-Alkylgruppen sind; und $R^3$ $CH_3$ ist.

**6.** Polymer gemäß Anspruch 5, wobei die gehinderten primären Aminseitengruppen durch die folgende Formel gekennzeichnet sind:

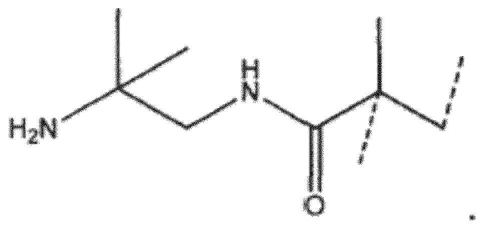

7. Eine Zusammensetzung, die das gehinderte Aminpolymer gemäß einem der Ansprüche 1 bis 6, ein Bindemittel und eine oder mehrere Komponenten, ausgewählt aus der Gruppe, bestehend aus einem Isothiazolon, einem HEUR-Rheologiewandler, einem HEC-Rheologiewandler und einem Pigment, beinhaltet.

8. Zusammensetzung gemäß Anspruch 7, die ein Acrylbindemittel, von 5 bis 100 ppm Amin des gehinderten Aminpolymers und von 1 bis 20 ppm des Isothiazolons beinhaltet, wobei das gehinderte Aminpolymer ein 1,2-Diamino-2-methylpropan-g-poly(methylmethacrylat) ist.

9. Zusammensetzung gemäß Anspruch 7 oder 8, die einen HEUR-Rheologiewandler und ein Pigment beinhaltet, wobei das Pigment $TiO_2$ ist.

10. Zusammensetzung gemäß Anspruch 7 oder 8, die einen HEC-Rheologiewandler und ein Pigment beinhaltet, wobei das Pigment $TiO_2$ ist.

## Revendications

1. Un polymère ayant un squelette comprenant des groupes amine primaire encombrée latéraux qui sont attachés à un atome de carbone quaternaire et qui sont liés au squelette polymère par le biais d'un amide, d'un ester, ou d'une liaison thioester.

2. Le polymère de la revendication 1, lequel comprend en outre des unités structurales d'un acrylate ou d'un méthacrylate.

3. Le polymère de la revendication 2 dans lequel le méthacrylate est du méthacrylate de méthyle et les groupes amine primaire encombrée latéraux sont liés au squelette polymère par le biais d'une liaison amide.

4. Le polymère de l'une ou l'autre des revendications 2 ou 3, lequel contient de 5 à 90 pour cent molaire d'unités structurales de méthacrylate de méthyle ou d'acide méthacrylique ou d'une combinaison de ceux-ci et de 10 à 95 pour cent molaire de groupes amine primaire encombrée latéraux **caractérisé par** la formule suivante :

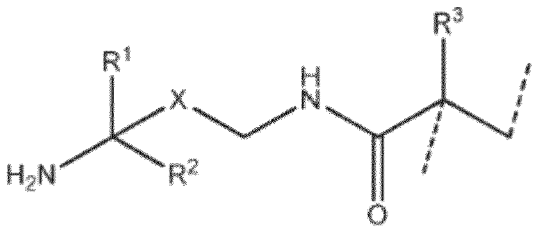

dans laquelle $R^1$ et $R^2$ sont chacun indépendamment un groupe alkyle ramifié ou linéaire en $C_1$ à $C_{12}$ ; $R^3$ est un H ou $CH_3$ ; X est une liaison ou un groupe linéaire, ramifié, ou cyclique contenant de 1 à 20 atomes de carbone ; et dans laquelle les traits en pointillés représentent le point d'attache du groupe au squelette polymère.

5. Le polymère de la revendication 4 dans lequel les groupes amine primaire encombrée latéraux sont **caractérisés par** la formule suivante :

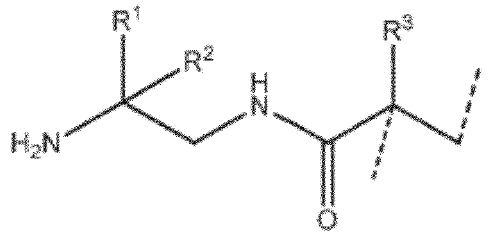

dans laquelle $R^1$ et $R^2$ sont chacun des groupes alkyle linéaires ou ramifiés en $C_1$ à $C_4$ ; et $R^3$ est un $CH_3$.

6. Le polymère de la revendication 5 dans lequel les groupes amine primaire encombrée latéraux sont **caractérisés par** la formule suivante :

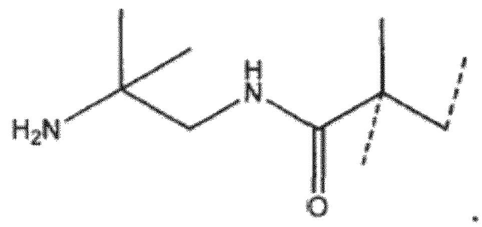

7. Une composition comprenant le polymère à amine encombrée de n'importe lesquelles des revendications 1 à 6, un liant, et un ou plusieurs composants sélectionnés dans le groupe constitué d'une isothiazolone, d'un modificateur de rhéologie HEUR, d'un modificateur de rhéologie HEC, et d'un pigment.

8. La composition de la revendication 7, laquelle comprend un liant acrylique, de 5 à 100 ppm d'amine du polymère à amine encombrée, et de 1 à 20 ppm de l'isothiazolone, dans laquelle le polymère à amine encombrée est un 1,2-diamino-2-méthylpropane-g-poly(méthyl méthacrylate).

9. La composition de la revendication 7 ou de la revendication 8, laquelle comprend un modificateur de rhéologie HEUR et un pigment, dans laquelle le pigment est du $TiO_2$.

10. La composition de la revendication 7 ou de la revendication 8, laquelle comprend un modificateur de rhéologie HEC et un pigment, dans laquelle le pigment est du $TiO_2$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2009140061 A2
- US 6448279 B1